# EUROPÄISCHE PATENTANMELDUNG

(11) **EP 2 505 542 A1**
(43) Veröffentlichungstag der Anmeldung: **03.10.2012**
(21) Anmeldenummer: 12001341.2
(22) Anmeldetag: 28.02.2012
(51) Int. Cl.: B66C 23/86, B60T 13/68

(54) **Hydraulische Bremsvorrichtung für einen Kranantrieb sowie Kran**

(30) Priorität: 28.03.2011 DE 102011015286
(71) Anmelder: Liebherr-Werk Nenzing Ges.m.b.H, 6710 Nenzing (AT)
(72) Erfinder: Kräuler, Wilhelm, 6842 Koblach (AT); Gaßner, Christof, 6722 St. Gerold (AT)
(74) Vertreter: Laufhütte, Dieter

(57) **Zusammenfassung**

Die vorliegende Erfindung betrifft eine hydraulische Bremsvorrichtung für einen Kranantrieb zur Verrichtung der Kranarbeit, insbesondere Drehwerk, mit wenigstens einer hydraulischen Haltebremse zum Abbremsen der Antriebsbewegung des Kranantriebs in einer Notfallsituation, wobei wenigstens ein Druckregelventil zur Ansteuerung wenigstens einer Haltebremse vorgesehen ist, um einen zeitlich verzögerten Bremsmomentaufbau zu gewährleisten.

## Beschreibung

Die Erfindung betrifft eine hydraulische Bremsvorrichtung für einen Kranantrieb zur Verrichtung der Kranarbeit, insbesondere Drehwerk, mit wenigstens einer hydraulischen Haltebremse zum Abbremsen der Antriebsbewegung des Kranantriebs in einer Notfallsituation.

Der Aufbau bekannter Kransysteme ist oftmals in einen Unter- und Oberwagen unterteilt. Für Drehbewegungen des Oberwagens relativ zum Unterwagen sind beide Bauteile über ein Drehwerk miteinander gekoppelt. Das Drehwerk umfasst ein oder mehrere Antriebsmotoren zur Erzeugung einer Drehbewegung, die im Normalbetrieb bedarfsweise über den installierten Antrieb hydraulisch abgebremst wird.

In Notfallsituationen wird der hydraulische Antrieb deaktiviert, beispielsweise mittels Rundschaltung, und die Drehbewegung wird durch eine oder mehrere am Drehwerk installierte Haltebremsen gestoppt. Die Haltebremsen ermöglichen in Notfallsituationen die Einbringung des notwendigen Bremsmomentes auf das Drehwerk, um eine möglichst schnelle Unterbrechung der Drehbewegung zu erreichen.

Bei den derzeit eingesetzten Bremsanlagen für Drehwerke verhält es sich allerdings so, dass bei Betätigung eines Notaussignals das entsprechende Bremsmoment abrupt einsetzt und die Drehbewegung des Drehwerks schlagartig gestoppt wird. Da der Oberwagen in der Regel einen massiven und trägen Kranaufbau aufweist, kann es bei einem abrupten Anhalten der Drehbewegung zu erheblichen Schädigungen des Kranwerks kommen.

Ein möglicher Lösungsansatz wird in der DE 10 2008 056 022 B3 aufgezeigt, die ein Krandrehwerk mit einer Vielzahl von unabhängig betätigbaren Haltebremsen vorschlägt. Im Falle eines aufgetretenen Notaus-Ereignisses werden die Bremsen zeitlich aufeinanderfolgend betätigt, was ein gemäßigtes Abbremsen des Drehwerks erlaubt. Nachteilig bei dieser Lösung ist jedoch, dass zur Umsetzung ein Drehwerk mit mehreren Haltebremsen vorausgesetzt wird. Für Krandrehwerke mit lediglich einer Haltebremse ist der vorgestellte Lösungsansatz dagegen unbrauchbar.

Aufgabe der vorliegenden Erfindung ist es, eine hydraulische Bremsvorrichtung für einen Kranantrieb aufzuzeigen, die die vorangehend erläuterte Problematik überwindet.

Diese Aufgabe wird durch eine hydraulische Bremsvorrichtung für einen Kranantrieb gemäß den Merkmalen des Anspruchs 1 gelöst. Demnach umfasst die Bremsvorrichtung wenigstens eine hydraulische Haltebremse zum Abbremsen der Antriebsbewegung des Kranantriebs in einer Notfallsituation. Bei dem Kranantrieb handelt es sich insbesondere um ein Drehwerk. In diesem Fall soll die Drehbewegung des Drehwerks durch die erfindungsgemäße Bremsvorrichtung gebremst werden.

Die Ausführung ist allerdings nicht auf ein Drehwerk beschränkt. Grundsätzlich ist der Einsatz der erfindungsgemäßen Bremsvorrichtung bei jeder Art von Kranantrieben zur Verrichtung der Kranarbeit denkbar. Hierunter fallen unter anderem ein Hubwerk oder auch ein Einziehwerk.

Erfindungsgemäß wird wenigstens eine Haltebremse über wenigstens ein vorgesehenes Druckregelventil angesteuert, um einen zeitlich verzögerten Bremsmomentaufbau zu gewährleisten.

Das erfindungsgemäße Prinzip gilt gleichermaßen für Haltebremsen, die aufgrund eines Druckaufbaus oder Druckabfalls eine Bremswirkung erzielen. Der erfindungswesentliche Vorteil der Erfindung besteht darin, dass die Druckänderung über die Zeit im Versorgungsdruck der Haltebremse aufgrund des eingesetzten Druckregelventils geregelt abläuft und daher beliebig zeitverzögert auftritt. Das angreifende Bremsmoment der Haltebremse liegt folglich nicht sofort an, sondern baut sich über einen definierbaren Zeitraum auf. In der Regel wird allerdings auf Haltebremsen zurückgegriffen, die aufgrund eines Druckabfalls eine Bremswirkung erzielen, da gerade in Notfallsituationen ein Druckverlust anzunehmen ist.

Im Gegensatz dazu erfolgt die Ansteuerung derartiger Haltebremsen bei aus dem Stand der Technik bekannten Kranantrieben in der Regel direkt über ein Wegeventil, das den Versorgungsdruck zur Haltebremse entweder abrupt unterbricht oder sofort durchschaltet. Das maximal mögliche Bremsmoment liegt demnach nahezu unverzögert an.

Wenigstens ein Druckregelventil wird wenigstens über eine Steuerdruckleitung angesteuert, um das Durchlassvolumen der Versorgungsdruckleitung zur Haltebremse auszusteuern. Bevorzugt ist die Steuerdruckleitung über wenigstens ein Wegeventil an die Versorgungsdruckleitung der Haltebremse gekoppelt. In diesem Fall ist das Druckventil als direkt gesteuertes Druckregelventil ausgeführt. Zweckmäßig ist der Einsatz eines elektrisch ansteuerbaren 4-2-Wegeventils. Im Normalfall ist die Steuerdruckleitung des Druckregelventils mit der Versorgungsdruckleitung verschaltet, der Steuerdruck entspricht dann dem Druckniveau der Versorgungsdruckleitung. Die Betätigung des Wegeventils, beispielsweise zum Auslösen eines Notaus-Stops, bewirkt ein Durchschalten der Steuerdruckleitung zu einem Rücklauftank.

Alternativ kann das Druckregelventil als vorgesteuertes Druckventil ausgeführt sein. In diesem Fall ist die Steuerdruckleitung des Druckregelventils mit dem Rückflussauslass des Druckregelventils gekoppelt.

Aus Sicherheitsgründen kann es zweckmäßig sein, dass wenigstens ein Druckspeicher in der Versorgungsdruckleitung der Haltebremse angeordnet ist. Beispielsweise kann aufgrund eines hydraulischen Defekts ein vollständiger Druckausfall in der Versorgungsdruckleitung auftreten. Der angeordnete Energiespeicher kann den abrupten Druckabfall zumindest zeitweise kompensieren, um dennoch ein sich zeitlich verzögert aufbauendes Bremsmoment gewährleistet zu können. Der Druckspeicher ist bevorzugt als Blasenspeicher ausgeführt. Dennoch sind alternative Ausgestaltungen denkbar.

Um den Druckabfall innerhalb der Steuerdruckleitung des Druckregelventils zeitlich zu verzögern, kann es zweckmäßig sein, dass wenigstens ein Energiespeicher mit der Steuerdruckleitung verbunden bzw. verbindbar ist. Der Druckabfall in der Steuerdruckleitung wird über eine entsprechende Schaltstellung des Wegeventils ausgelöst. Der sofortige Druckabfall kann über das gespeicherte Druckvolumen des Energiespeichers über einen gewissen Zeitraum hinweg kompensiert werden, um den Druckabfall des Steuerdrucks zeitlich zu verzögern.

Wenigstens eine eingesetzte Haltebremse des Kranantriebs kann als Lamellenbremse, Bandbremse oder Scheibenbremse ausgeführt sein. Das erfindungswesentliche Grundprinzip der vorliegenden Erfindung ist dabei unabhängig von der vorliegenden Ausgestaltung der eingesetzten Haltebremse.

Zweckmäßig greift die Haltebremse am Abtrieb wenigstens eines Antriebsmotors des Kranantriebs an.

Die Erfindung betrifft des Weiteren einen Kran mit wenigstens einem Kranantrieb zur Verrichtung der Kranarbeit, wobei der Kran erfindungsgemäß wenigstens eine hydraulische Bremsvorrichtung gemäß einer der voranstehend erläuterten Ausgestaltungen umfasst. Offensichtlich weist der Kran demnach dieselben Vorteile und Eigenschaften wie die beanspruchte erfindungsgemäße hydraulische Bremsvorrichtung auf, weshalb an dieser Stelle auf eine wiederholende Erläuterung verzichtet wird.

Der Kran weist ein Drehwerk und/oder ein Hubwerk und/oder ein Einziehwerk auf, das oder die mit entsprechenden Antrieben ausgestattet sind und ebenfalls über mindestens eine hydraulische Bremsvorrichtung verfügen.

Weitere Vorteile und Einzelheiten der Erfindung werden im folgenden anhand von mehreren Zeichnungen näher erläutert. Es zeigen:
- Figur 1:: eine perspektivische Ansicht des erfindungsgemäßen Krans mit erfindungsgemäßer hydraulischer Bremsvorrichtung,
- Figur 2:: eine perspektivische Detailansicht der Drehbühne gemäß Figur 1,
- Figur 3:: ein hydraulisches Schaltbild der erfindungsgemäßen hydraulischen Bremsvorrichtung gemäß einer ersten Ausführungsmöglichkeit,
- Figur 4:: ein weiteres hydraulisches Schaltbild der erfindungsgemäßen hydraulischen Bremsvorrichtung gemäß einer zweiten Ausführungsvariante und
- Figur 5:: Darstellungen des hydraulischen Verlaufs an der Haltebremse einer herkömmlichen Bremsvorrichtung sowie an der Haltebremse der erfindungsgemäßen Bremsvorrichtung.

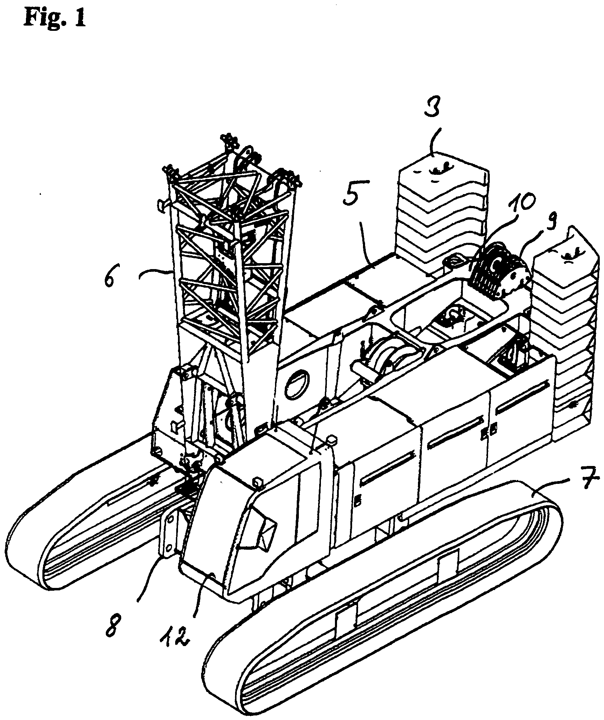

Ein mögliches Ausführungsbeispiel des erfindungsgemäßen Krans ist in Figur 1 gezeigt. Dabei handelt es sich um einen Raupenkran mit einem Ausleger 6, der an dem Oberwagen 5 gelenkig angeordnet ist, sowie mit einem Unterwagen 8, der ein Raupenfahrwerk 7 aufweist. Der Oberwagen 5 des Raupenkrans ist dabei drehbar über ein Drehwerk 20 auf dem Unterwagen 8 gelagert. Als Gegengewicht zum Ausleger 6 sowie der mit dem erfindungsgemäßen Raupenkran zu hebenden Last sind am Oberwagen 5 Ballastelemente 3 in Form von Ballastplatten angeordnet.

Die tragende Schweißkonstruktion des Oberwagens 5 ist die Drehbühne 10. Die Drehbühne 10 dient als Aufrichterrahmen für den Ausleger 6 sowie zur Aufnahme der einzelnen Baugruppen für die Hauptfunktion des Krans. Im Ausführungsbeispiel der Figur 1 sind auf dem Oberwagen 5, d. h. an der Drehbühne 10, das Hubwerk, das Einziehwerk 9, das Drehwerk 20, das Wippwerk, eine Krankabine 12 sowie das Auslegersystem 6 installiert.

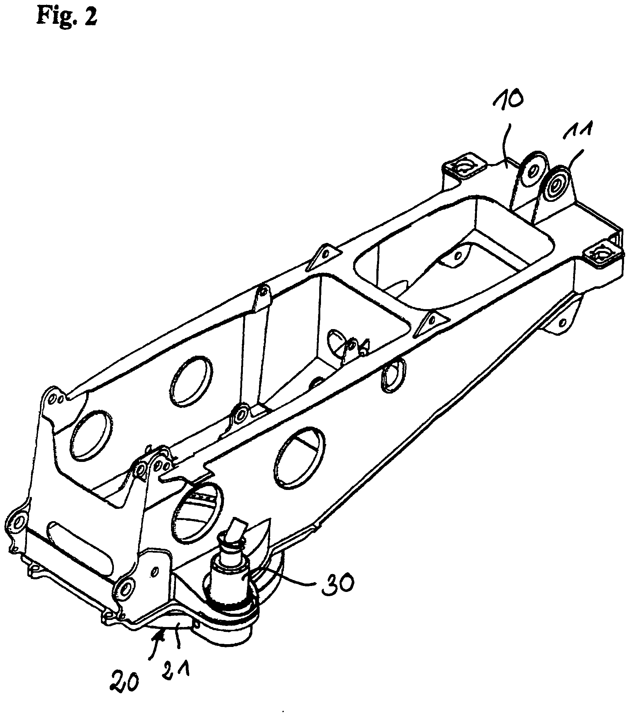

Eine detaillierte Darstellung der Drehbühne 10 ist der perspektivischen Ansicht der Figur 2 zu entnehmen. Am hinteren Ende der Drehbühne 10 ist der Windenrahmen 11 zur Aufnahme des Einziehwerkes 9 angeordnet sowie entsprechende Vorrichtungen zur Aufnahme der Ballastplatten 3. Am vorderen Ende befinden sich geeignete Verbolzstellen für die gelenkige Befestigung des Auslegersystems 6.

Ferner ist am vorderen Ende der Drehbühne 10 ein Teil des Drehwerks 20 zur drehbaren Lagerung des Oberwagens 5 auf dem Unterwagen 8 angeordnet.

Am Außenumfang des Rollenkranzes 21 des Drehwerks 20 sitzt der Drehwerkantrieb 30, der eine relative Drehbewegung des Oberwagens 5 gegenüber dem Unterwagen 8 in beide Richtungen erzeugt. Der verwendete Antriebsmotor basiert beispielsweise auf einem Axialkolbenmotor, an dessen Abtriebswelle eine installierte Feder-Lamellenbremse 50 angreift und bei Bedarf, d.h. in einer Notfallsituation, ein definierbares Bremsmoment zum Abbremsen der Drehbewegung aufbringt.

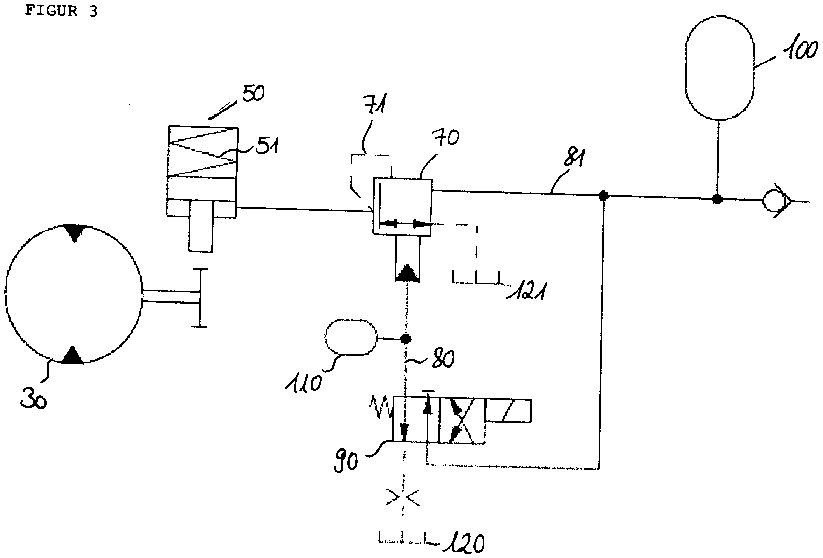

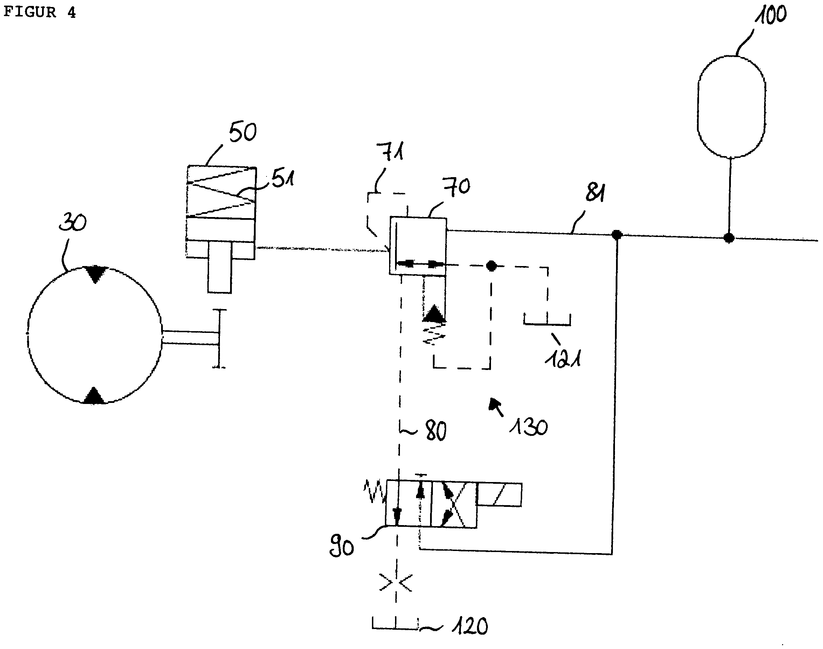

Bei einem Notaus-Ereignis soll die Drehbewegung des Oberwagens 5 und damit des Auslegersystems 6 möglichst rasch gestoppt werden, um die von dem verschwenkenden Kranaufbau, insbesondere Auslegersystem 6, ausgehenden Gefahrenquellen möglichst schnell ausräumen zu können. Ein zu abruptes Abbremsen der Drehbewegung des Oberwagens 5 kann unter Umständen allerdings aufgrund der Masse und Trägheit des installierten Kranaufbaus zu massiven Schädigungen der einzelnen Kranbauteile, insbesondere des Auslegersystems 6 führen. Aus diesem Grund schlägt die vorliegende Erfindung den Einsatz der hydraulischen Bremsvorrichtung gemäß einer der in Figur 3, 4 dargestellten Ausführungsmöglichkeiten vor.

Figur 3 zeigt ein hydraulisches Schaltbild für die Ansteuerung einer Feder-Lamellenbremse 50, die ein Bremsmoment auf den Abtrieb des Drehwerkantriebs 30 aufbringt.

Die Feder-Lamellenbremse 50 wird über die Versorgungsdruckleitung 81 mit dem notwendigen Versorgungsdruck gespeist, so dass die Bremslamellen der Feder-Lamellenbremse 50 gegen die integrierte Feder 51 wirken und nicht in Eingriff mit dem Abtrieb des Drehwerkantriebs 30 stehen. Die Versorgungsdruckleitung 81 ist über das Druckregelventil 70 mit der Federlamellenbremse 50 verbunden.

Die Ausführung der Figur 3 zeigt ein direkt gesteuertes Druckregelventil 70. Die Steuerdruckleitung 80 des Druckregelventils 70 ist über ein 4-2-Wegeventil 90 an die Versorgungsdruckleitung 81 gekoppelt. Das elektrisch steuerbare Wegeventil 90 dient zum Auslösen eines Notstopp-Ereignisses. Da die Feder-Lamellenbremse 50 auch zur Feststellung des Drehwerkes im Stillstand dient, erfolgt die Aktivierung der Feststellfunktion ebenfalls über das Wegeventil 90.

Im Normalzustand verschaltet das Wegeventil 90 die Versorgungsdruckleitung 81 mit der Steuerdruckleitung 80 des Druckregelventils 70. Am Druckregelventil 70 liegt demnach ein Steuerdruck mit dem Druckniveau der Versorgungsdruckleitung 81 an. Das Ausgangsdruckniveau des Druckregelventils 70, das an der Lamellenbremse 50 anliegt, entspricht demnach dem Druckniveau der Versorgungsdruckleitung 81. Über die Rückmeldung 71 erfolgt eine kontinuierliche Anpassung des Ausgangsdruckniveaus an den anliegenden Steuerdruck der Steuerdruckleitung 80.

In der Darstellung der Figur 3 ist das Wegeventil 90 in die Notausstellung geschaltet, weshalb das Hydraulikmedium innerhalb der Steuerdruckleitung 80 über das Wegeventil 90 in den Hydrauliktank 120 zurückfließt. Der abfallende Steuerdruck bewirkt einen Druckabfall am mit der Lamellenbremse 50 verbunden Ausgang. Der Druckausgleich erfolgt über den Rückflussauslass des Druckregelventils 70, der in den Hydrauliktank 121 mündet. Der Druckabfall an der Lamellenbremse 50 orientiert sich am vorherrschenden Druckniveau innerhalb der Steuerdruckleitung 80. Um den Abfall zeitlich zu verzögern, ist der Energiespeicher 110 an die Steuerdruckleitung 80 gekoppelt.

Ein möglicher Totalausfall des Versorgungsdruckes der Versorgungsdruckleitung 81 kann über den Energiespeicher 100, der an die Versorgungsdruckleitung 81 angeschlossen ist, zeitweise kompensiert werden. Ein vollständiger Druckverlust beruht in der Regel auf einen erheblichen Defekt im hydraulischen Versorgungssystem. Als Beispiel sind Leckagen, ein Stromausfall mit Pumpenstillstand oder anderweitige Defekte zu nennen. Der sofortige Druckverlust in der Versorgungsdruckleitung 81 kann aufgrund des Energiespeichers 100 zeitlich verzögert werden, um auch für derartige Fehlerfälle ein zeitlich verzögert einsetzendes Bremsmoment der Lamellenbremse 50 gewährleisten zu können.

Eine alternative Ausführung der erfindungsgemäßen Bremsvorrichtung ist der Figur 4 zu entnehmen. In diesem Ausführungsbeispiel wird das Druckregelventil 70 entgegen der Ausführung aus Figur 3 nicht direkt, sondern über die Vorsteuerung 130 angesteuert. Der Rückflussauslass des Druckregelventils 70 ist dabei an den Steuereingang gekoppelt. Hierdurch wird eine zeitliche Verzögerung des Druckabfalls in der Steuerungsleitung 80 bewirkt. Der optionale Energiespeicher 110 der Figur 3 ist folglich überflüssig. Die übrigen Komponenten der hydraulischen Bremsvorrichtung aus Figur 4 entsprechen der Ausführung gemäß Figur 3 und sind daher mit identischen Bezugszeichen gekennzeichnet. Eine wiederholte Erläuterung der bestehenden Komponenten ist daher an dieser Stelle nicht mehr erforderlich.

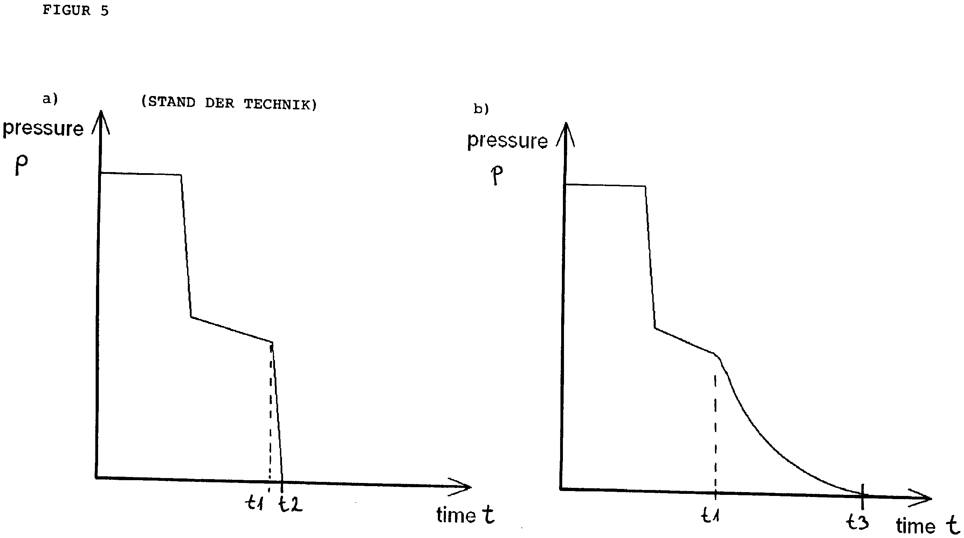

Die Figur 5 zeigt zwei unterschiedliche Zeitdiagramme, die den Druckabfall p an der Federlamellenbremse 50 über die Zeit *t* während des Bremsvorgangs charakterisieren. Figur 5a entspricht dem zeitlichen Verlauf des Druckabfalls p, der sich bei einer herkömmlichen aus dem Stand der Technik bekannten Ansteuerung einer Lamellenbremse mittels eines Wegeventils einstellt.

Demgegenüber zeigt das Zeitdiagramm 5b den zeitlichen Verlauf des Druckabfalls p an einer Lamellenbremse 50 mit der erfindungsgemäßen Bremsvorrichtung. Die Zeitpunkte *t₂* bzw. *t₃* markieren dabei den Moment des vollständigen Druckverlustes an der Lamellenbremse 50 und folglich das maximale Bremsmoment, das am Drehwerk des Krans anliegt. Das Zeitintervall t₁-t₂ vom Zeitpunkt t₁ bis zum Moment des vollständigen Druckverlustes in Figur 5a repräsentiert den Aufbau des Bremsmomentes und fällt bei einem Einsatz der aus dem Stand der Technik bekannten Bremsvorrichtung sehr knapp aus, wohingegen durch die erfindungsgemäße Bremsvorrichtung ein deutliches längeres Zeitintervall t₁-t₃ (Figur 5b) bis zum maximalen Bremsmoment geschaffen wird. Die vorteilhafte Verzögerung des sich aufbauenden Bremsmomentes vermeidet Beschädigungen des Kranaufbaus bei einer zu abrupten Unterbrechung der Drehbewegung des Oberwagens 8, wobei weiterhin ein ausreichend schnelles Abbremsen der Drehbewegung in Notsituationen gewährleistet wird.

## Patentansprüche

1. Hydraulische Bremsvorrichtung für einen Kranantrieb zur Verrichtung der Kranarbeit, insbesondere Drehwerk, mit wenigstens einer hydraulischen Haltebremse zum Abbremsen der Antriebsbewegung des Kranantriebs in einer Notfallsituation,
**dadurch gekennzeichnet,**
**dass** wenigstens ein Druckregelventil zur Ansteuerung wenigstens einer Haltebremse vorgesehen ist, um einen zeitlich verzögerten Bremsmomentaufbau zu gewährleisten.

2. Hydraulische Bremsvorrichtung nach Anspruch 1, **dadurch gekennzeichnet, dass** die Steuerdruckleitung des Druckregelventils über mindestens ein Wegeventil an die Versorgungsdruckleitung der Haltebremse gekoppelt ist.

3. Hydraulische Bremsvorrichtung nach einem der vorangegangenen Ansprüche, **dadurch gekennzeichnet, dass** wenigstens ein Druckregelventil ein direktgesteuertes Druckregelventil ist.

4. Hydraulische Bremsvorrichtung nach einem der vorangegangenen Ansprüche, **dadurch gekennzeichnet, dass** wenigstens ein Druckregelventil ein vorgesteuertes Druckregelventil ist.

5. Hydraulische Bremsvorrichtung nach einem der vorangegangenen Ansprüche, **dadurch gekennzeichnet, dass** wenigstens ein Druckspeicher in der Versorgungsdruckleitung der Haltebremse vorgesehen ist, um einen Drucktotalausfall zu kompensieren.

6. Hydraulische Bremsvorrichtung nach einem der vorangegangenen Ansprüche, **dadurch gekennzeichnet, dass** wenigstens ein Druckspeicher in der Steuerdruckleitung des Druckregelventils angeordnet ist.

7. Hydraulische Bremsvorrichtung nach einem der vorangegangenen Ansprüche, **dadurch gekennzeichnet, dass** die Haltebremse eine Lamellenbremse ist.

8. Hydraulische Bremsvorrichtung nach einem der vorangegangenen Ansprüche, **dadurch gekennzeichnet, dass** die Haltebremse eine Bandbremse ist.

9. Hydraulische Bremsvorrichtung nach einem der vorangegangenen Ansprüche, **dadurch gekennzeichnet, dass** wenigstens eine Haltebremse an wenigstens einem Abtrieb des Drehwerkantriebs angreift.

10. Kran mit einem Kranantrieb zur Verrichtung der Kranarbeit, insbesondere Drehwerk, **dadurch gekennzeichnet, dass** der Kran wenigstens eine hydraulische Bremsvorrichtung zum Abbremsen des Antriebsbewegung gemäß einem der vorangegangenen Ansprüche umfasst.
